(19)

Europäisches
Patentamt
European
Patent Office
Office européen
des brevets

(11)    **EP 3 992 223 B1**

(12)    **EUROPEAN PATENT SPECIFICATION**

(45) Date of publication and mention
of the grant of the patent:
**17.04.2024   Bulletin 2024/16**

(21) Application number: **21205152.8**

(22) Date of filing: **28.10.2021**

(51) International Patent Classification (IPC):
**C08G 18/42** *(2006.01)*      **C08G 18/44** *(2006.01)*
**C08G 18/48** *(2006.01)*      **C08L 25/08** *(2006.01)*
**C08L 53/00** *(2006.01)*      **C08L 75/04** *(2006.01)*
**C08L 75/06** *(2006.01)*      **C08L 75/08** *(2006.01)*

(52) Cooperative Patent Classification (CPC):
(C-Sets available)
**C08G 18/48; C08G 18/42; C08G 18/44;**
**C08L 53/00; C08L 75/04; C08L 75/06; C08L 75/08;**
C08G 2410/00                                    (Cont.)

(54) **THERMOPLASTIC ELASTOMER COMPOSITION AND USE THEREOF AS SOLING MATERIAL**

THERMOPLASTISCHE ELASTOMERZUSAMMENSETZUNG UND IHRE VERWENDUNG ALS
BESOHLUNGSMATERIAL

COMPOSITION D'ÉLASTOMÈRE THERMOPLASTIQUE ET SON UTILISATION EN TANT QUE
MATÉRIAU DE SEMELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.10.2020   EP 20204585**

(43) Date of publication of application:
**04.05.2022   Bulletin 2022/18**

(73) Proprietor: **Solace Chem GbR
70619 Stuttgart (DE)**

(72) Inventors:
• **FARNAD, Mehdi
70619 Stuttgart (DE)**
• **HEYL, Roland
70619 Stuttgart (DE)**

(74) Representative: **Jacobi, Markus Alexander
Patentanwälte
Isenbruck Bösl Hörschler PartG mbB
Eastsite One
Seckenheimer Landstrasse 4
68163 Mannheim (DE)**

(56) References cited:
**EP-A1- 2 204 416          WO-A1-2020/146323
US-A1- 2010 010 171      US-A1- 2012 285 597
US-A1- 2018 215 910      US-A1- 2020 040 182**

• **VERSTRAETE G ET AL: "Thermoplastic
polyurethane-based intravaginal rings for
prophylaxis and treatment of (recurrent) bacterial
vaginosis", INTERNATIONAL JOURNAL OF
PHARMACEUTICS, ELSEVIER, NL, vol. 529, no.
1, 27 June 2017 (2017-06-27) , pages 218-226,
XP085156669, ISSN: 0378-5173, DOI:
10.1016/J.IJPHARM.2017.06.076**
• **Itzkoff Mark L: "Attachment 21 -Revised
Environmental Assessment", Environmental
Assessment for Food Contact Notification FCN
1820, 28 August 2017 (2017-08-28), pages 1-7,
XP093020026, Retrieved from the Internet:
URL:https://fda.report/media/110882/Enviro
nmental-Assessment-for-Food-Contact-Notifi
cation-No.-1820.pdf [retrieved on 2023-02-01]**
• **Siddhi Lama B.C.: "Investigation of the
mechanical properties and biocompatibility of
planar and electrospun alkene-styrene
copolymers against P(VDF-TrFE) and porcine
skin: Potential use as second skin substrates",
Journal of the Mechanical Behavior of Biomedical
Materials, 26 March 2021 (2021-03-26), pages
1-12, XP093020031, DOI:
10.1016/j.jmbbm.2021.104481 Retrieved from the
Internet:
URL:https://www.sciencedirect.com/science/
article/pii/S1751616121001673 [retrieved on
2023-02-01]**

**EP 3 992 223 B1**

**(Cont. next page)**

Remarks:
The file contains technical information submitted after the application was filed and not included in this specification

(52) Cooperative Patent Classification (CPC): (Cont.)

C-Sets
**C08L 53/00, C08L 75/04;**
**C08L 75/04, C08L 53/00**

Remarks:
The file contains technical information submitted after the application was filed and not included in this specification

**Description**

The invention relates to thermoplastic elastomer compositions comprising an aromatic thermoplastic polyurethane and a block copolymer comprising at least one polymer block substantially consisting of repeating units derived from at least one vinyl aromatic monomer, and at least one polymer block substantially consisting of repeating units derived from isobutylene. The thermoplastic elastomer composition exhibits improved slip resistance and is advantageously used as material requiring anti-slip properties, preferably as soling material for shoes, in particular safety shoes.

Despite of superior mechanical properties and easy processing of thermoplastic polyurethane (TPU) soling materials, the slip resistance of TPU outsoles is a technical issue to be improved. Improvements of slip resistance of soling materials were made with different approaches. One way to address the problem as discussed in some publications is by adjusting the sole profile.

US 2,065,386 and US 2,160,601 teach improved slip resistance by the usage of anti-slip devices which are usually adapted to be nailed or screwed to the heel of the shoe. US 2009/0249652 and US 2010/0088929 teach methods for improving the slip resistance of shoe soles by generating certain patterns in the sole.

The contribution of the material selection and chemistry to the solution was not deeply investigated in the prior art so far.

US 2001/0046588 relates to an anti-slip surface, which is made of individual, non-interconnected asperities of an anti-slip polymer material, which does not form a continuous film over the surface of the thermoplastic product. US 2006/0100378 discloses a shoe sole made of a material including polyvinyl chloride, plasticizer swelling powder, and stabilizer foaming powder to increase the anti-slip property.

CN 110283298 relates to a slip resistant thermoplastic polyurethane, comprising 50 to 70 parts by weight polyol, which is hydroxy terminated at the end of the chain, as component A, 10 to 20 parts by weight polyisocyanate as component B, 1.5 to 3.5 parts by weight of 2-12 C linear diol as component C, 0.05 to 1 parts by weight silicone having reactive groups being reactive to isocyanate functions at the end of the chain as component D, 15 to 30 parts by weight diethylene glycol dibenzoate as component E, and 0.001 to 0.1 wt.-% of a catalyst.

CN 105086422 discloses long glass fiber reinforced thermoplastic polyurethane (TPU) non-slip soles, comprising 90 to 110 part by weight of elastomeric TPU, 20 to 40 parts by weight of glass fibers, 0.5 to 1 parts by weight of anti-wear agent, 2.5 to 4 parts by weight of crosslinking agent, 0.5 to 1 parts by weight of bridging aid, 4 to 6 parts by weight of compatibility agent, 1 to 3 parts by weight of active agent, 0.4 to 0.6 parts by weight of antioxidant, 0.4 to 0.6 parts by weight of flow aid and 1 to 2.5 parts by weight of blowing agent.

The present invention has improved the chemistry of TPU material blends, in particular to increase the anti-slip property of outsoles, independent of the sole profile.

Thermoplastic elastomer compositions comprising thermoplastic polyurethanes and styrenic block copolymers are known. US 2010/0160545 relates to a thermoplastic elastomer based on a blend of styrenic block copolymer and a thermoplastic polyurethane made from aliphatic diisocyanates is disclosed which has excellent translucency, approaching transparency and adhesion to engineering thermoplastic compounds for use in multiple component polymer structures.

WO 2016/130639 discloses thermoplastic elastomer formulations including blends of thermoplastic elastomers of different chemistries, which as blends exhibit damping properties across a broad range of temperatures, and across a broad range of vibrational frequencies.

WO 2018/200510 deals with a damping material which is based on a thermoplastic elastomer compound comprising (A) polyester-type thermoplastic polyurethane; and (B) no greater than about 30 weight percent, by weight of the compound, of styrene-isobutylene-styrene block copolymer, wherein the compound has a haze of no greater than about 60% when injection molded and tested at a thickness of 3 mm according to ASTM D1003.

US 2010/010171 A1 relates to compositions comprising (a) anionic block copolymers of mono alkenyl arenes and isoprene, and (b) thermoplastic polyurethane elastomers. It is taught that SIS block copolymers are very effective for hardness modification of TPUs. Moreover, it is reported that blends of the TPU and SIS block copolymers result in optical clear compositions.

WO 2009/069666 A1 relates to a thermoplastic styrene elastomer composition for use in producing a molded article provisionally fixed and united to an olefin resin substrate. The thermoplastic styrene elastomer composition is characterized by comprising a styrene block copolymer (A), polypropylene (B), and a thermoplastic polyurethane elastomer (C).

US 2016/230000 A1 relates to a thermoplastic elastomer compound including a styrenic block copolymer and high softening point tackifier. The block copolymer has a Copolymer Tan Delta Peak Temperature and the thermoplastic elastomer compound has a Compound Tan Delta Peak Temperature. The Compound Tan Delta Peak Temperature is greater than the Copolymer Tan Delta Peak Temperature. The thermoplastic elastomer compound exhibits damping properties.

US 2018/118870 A1 relates to a polymer composition comprising 60 to 85 parts by weight of a thermoplastic polyurethane; and 15 to 40 parts by weight of a polyolefin, where the parts by weight of the thermoplastic polyurethane and parts by weight of the polyolefin add up to 100 parts by weight; and further comprising 1 to 15 parts by weight of a hydrogenated block copolymer derived from a vinyl aromatic monomer and a conjugated diene monomer, based on 100 parts by weight as a total amount of the thermoplastic polyurethane and polyolefin.

Minor modification of TPU shows surprisingly significant impact on slip behavior. A higher coefficient of friction as an indication for slip resistance is the matter of interest for the polyurethane industry to compete with other materials. This invention provides a solution to this issue to tackle the slippery problematic of TPU outsoles and this solution is fitting into the TPU chemistry and its processing very well.

The present inventors surprisingly observed significant improvements in slip resistance in outsole applications in the standard slip resistance test, which is applied for safety shoe application (EN ISO 13287 (2020) personal protective equipment) for thermoplastic polyurethane compositions with a composition additionally comprising at least one styrene block copolymer as disclosed herein.

The compositions can be obtained by blending the materials at defined ratios, e.g. by simple mixing the materials manually or using dry blend, extrusion or any other approach to make a polymer blend. The final product after injection of the blended thermoplastic elastomer composition (E) is a transparent or translucence or opaque and homogeneous plaque or sole without any defect and delamination.

The present invention relates to a thermoplastic elastomer composition (E) comprising (or consisting of):

(a) 50 to 95 wt.-% of at least one aromatic thermoplastic polyurethane (A);
wherein the at least one aromatic thermoplastic polyurethane (A) is selected from:

(a-1) a polyester type aromatic thermoplastic polyurethane (A-1) having a Shore hardness according to DIN ISO 7619-1 of 55 to 75 Shore A, and
(a-2) a polyether type aromatic thermoplastic polyurethane (A-2) having a Shore hardness according to DIN ISO 7619-1 of 20 Shore A to 80 Shore D,
or mixtures of components (A-1) and (A-2), wherein the components (A-1) and (A-2) sum up to 100 wt.-% of the aromatic thermoplastic polyurethane (A);

(b) 5 to 50 wt.-% of at least one block copolymer (B) comprising:

(B-1) at least one polymer block (B-1) substantially consisting of repeating units derived from at least one vinyl aromatic monomer, and
(B-2) at least one polymer block (B-2) substantially consisting of repeating units derived from isobutylene, wherein the at least one block copolymer (B) is preferably at least partially hydrogenated;
and wherein the weight ratio of (B-1) to (B-2) is from 15/85 to 30/70;

and
(c) 0 to 10 wt.-% of at least one optional additive (C),

wherein the components (A), (B) and (C) sum up to 100 wt.-% of the thermoplastic elastomer composition (E), wherein the thermoplastic elastomer composition (E) has a glass transition temperature Tg(E) of < 0°C, calculated according to the following equation:

$$Tg\,(E) = \frac{1}{\dfrac{w(A)}{Tg(A)} + \dfrac{w(B)}{Tg(B)}}$$

wherein

w(A) is the mass (weight) fraction of component A,
w(B) is the mass (weight) fraction of component B,
Tg(A) is the glass transition temperature of pure component A in Kelvin,
Tg(B) is the glass transition temperature of pure component B in Kelvin, and
Tg(E) is the glass transition temperature of composition E in Kelvin,
wherein Tg(A) and Tg(B) are determined by dynamic mechanical analysis at 1 Hz according to ISO 6721-2, wherein the thermoplastic elastomer composition (E) has a rebound resilience between 25 to 60 % according to DIN 53512, and
wherein the at least one aromatic thermoplastic polyurethane (A) is at least one transparent, translucence or opaque aromatic thermoplastic polyurethane (A).

The thermoplastic elastomer composition (E) can be prepared by extrusion, dry blending, and/or manual mixing the constituents (A), (B) and optionally (C).

The thermoplastic elastomer composition (E) is characterized in that it is suited to pass the SRA test for personal protective equipment according to DIN EN 13287 (2020) when used as soling material with a SRA forward heel slip according to EN 13287 of $\geq$ 0.28 and a SRA forward flat slip according to EN 13287 of $\geq$ 0.32. The thermoplastic elastomer composition (E) is further characterized in that it is suited to pass the SRB test for personal protective equipment according to EN 13287 (2020) when used as soling material with a SRB forward heel slip according to EN 13287 of $\geq$ 0.13 and a SRB forward flat slip according to EN 13287 of $\geq$ 0.18. Consequently, the thermoplastic elastomer composition (E) is characterized in that it is suited to the pass SRC test for personal protective equipment according to EN 13287 (2020) when used as soling material.

Conventional polyester based TPU typically pass the SRA test for personal protective equipment according to EN 13287 but fail in the SRB test for personal protective equipment according to EN 13287. Polyether based TPU typically fail in both tests. Thus, the outsole profile is often modified for conventional TPU soling materials to pass both tests and thereby is a limiting factor for design freedom for the soling materials using conventional TPU soling materials.

It has been surprisingly found by the present inventors that the thermoplastic elastomer composition (E) described herein is suited to pass the SRA, SRB and SRC tests for personal protective equipment according to EN 13287 (2020) at shoe level. This property is achieved by the addition of the block copolymer (B) as disclosed herein.

On the other hand, however, it has been found that TPU compositions comprising other styrenic copolymers such as poly(acrylonitrile-butadiene-styrene) (ABS) and poly(b-styrene-b-ethylene-b-butylene-b-styrene) (SEBS) cannot pass the SRA, SRB and SRC tests for personal protective equipment according to EN 13287 (2020) under otherwise identical conditions.

The invention also relates to the use of the thermoplastic elastomer composition (E) described herein for the production of outer shoe soles or parts of outer shoe soles. In a further aspect, the present invention is concerned with an article (T) formed from the thermoplastic elastomer composition (E) described herein. Preferably, the article (T) is obtained by molding processes, extruding processes, thermoforming processes, lamination processes, calendaring processes, and/or 3D printing processes. In a particular embodiment, the article (T) is a soling material, in particular as a soling material for safety footwear.

The thermoplastic elastomer composition (E), the constituents of thermoplastic elastomer composition (E) and the preparation and use of thermoplastic elastomer composition (E) are described in the following in detail.

Thermoplastic elastomer composition (E)

The thermoplastic elastomer composition (E) of the present invention comprises (or consists of):

(a) 50 to 95 wt.-%, in particular 55 to 85 wt.-%, of at least one aromatic thermoplastic polyurethane (A);
(b) 5 to 50 wt.-%, in particular 15 to 45 wt.-%, of at least one block copolymer (B) comprising:

(B-1) at least one polymer block (B-1) substantially consisting of repeating units derived from at least one vinyl aromatic monomer, and
(B-2) at least one polymer block (B-2) substantially consisting of repeating units derived from isobutylene, wherein the at least one block copolymer (B) is preferably at least partially hydrogenated; and

(c) 0 to 10 wt.-%, preferably 0.1 to 7 wt.-%, in particular 0.5 to 5 wt.-%, of at least one optional additive (C),

wherein the components (A), (B) and (C) sum up to 100 wt.-% of the thermoplastic elastomer composition (E), wherein the thermoplastic elastomer composition (E) has a glass transition temperature Tg(E), determined as described herein, of < 0°C, often < -10°C preferably < -20°C, more preferably < -30°C, in particular < -40°C. It has surprisingly been found that thermoplastic elastomer compositions (E) having glass transition temperatures Tg(E) above the application temperature (i.e. typically above 10°C or 0°C), show inferior results with respect to slip resistance.

M.P. Sepe describes in "Thermal Analysis of Polymers", Rapra Review Reports, Vol. 8, No. 11, 1997 that the tangent of delta ("tan delta") of a material is the ratio of its loss modulus (E") to its storage modulus (E'). Consequently, as the value of tan delta increases, the response of the material is relatively more viscous than it is elastic, which thus provides greater damping. When graphically depicted against temperature or frequency at a given temperature, a tan delta curve includes a prominent peak at a particular temperature, which is called the tan delta peak temperature and also can be representative of or comparable to the glass transition temperature (Tg) of the material.

The glass transition temperature Tg(E) is determined by measuring the glass transition temperatures Tg of components A and B by dynamic mechanical analysis (DMA) at 1 Hz according to ISO 6721-2.

The glass transition temperature Tg(E) of composition E is then calculated according to the following equation:

$$Tg\,(E) = \frac{1}{\dfrac{w(A)}{Tg(A)} + \dfrac{w(B)}{Tg(B)}}$$

wherein

w(A) is the mass (weight) fraction of component A,
w(B) is the mass (weight) fraction of component B,
Tg(A) is the glass transition temperature of pure component A in Kelvin,
Tg(B) is the glass transition temperature of pure component B in Kelvin, and
Tg(E) is the glass transition temperature of composition E in Kelvin.

For a composition (E) comprising multiple components (A, B, ..., X), each having an individual glass transition temperature, the glass transition temperature Tg(E) of the composition (E) is calculated according to the following equation:

$$Tg\,(E) = \frac{1}{\dfrac{w(A)}{Tg(A)} + \dfrac{w(B)}{Tg(B)} + \cdots + \dfrac{w(X)}{Tg(X)}}$$

wherein

w(X) is the mass (weight) fraction of component X,
Tg(X) is the glass transition temperature of pure component X in Kelvin, and
w(A), w(B), Tg(A), Tg(B) and Tg(E) are as defined above.

The method is further described in: Prediction of glass transition temperatures: Binary blends and copolymers; W. Brostow, R. Chiu, A. Vassilikou-Dova; Materials Letter 62 (2008); 3152-3155.

The at least one aromatic thermoplastic polyurethane (A) is at least one transparent, translucence or opaque aromatic thermoplastic polyurethane (A) preferably having a Shore hardness according to DIN ISO 7619-1 of < 85 Shore A, preferably ≤ 75 Shore A, more preferably ≤ 70 Shore A.

Unless otherwise noted, Shore hardness is determined according to DIN ISO 7619-1 (2012).

In one embodiment of the invention, the thermoplastic elastomer composition (E) comprises (or consists of):

(a) 50 to 95 wt.-% of polyether type aromatic thermoplastic polyurethane (A-2) having a Shore hardness according to DIN ISO 7619-1 of 20 Shore A to 80 Shore D, preferably < 85 Shore A, as the at least one aromatic thermoplastic polyurethane (A), preferably 55 to 85 wt.-%;
(b) 5 to 50 wt.-% of the at least one block copolymer (B), preferably 15 to 45 wt.-%; and
(c) 0 to 10 wt.-% of the at least one additive (C), preferably 0.1 to 7 wt.-%, in particular 0.5 to 5 wt.-%,

wherein the constituents (A), (B) and (C) sum up to 100 wt.-% of the thermoplastic elastomer composition (E).

In an alternative embodiment of the invention, the thermoplastic elastomer composition (E) comprises (or consists of):

(a) 50 to 95 wt.-% of a polyester type aromatic thermoplastic polyurethane (A-1) having a Shore hardness according to DIN ISO 7619-1 of 55 to 75 Shore A as the at least one aromatic thermoplastic polyurethane (A), preferably 55 to 85 wt.-%, in particular 70 to 85 wt.-%;
(b) 5 to 50 wt.-% of the at least one block copolymer (B), preferably 15 to 45 wt.-%, in particular 15 to 30 wt.-%; and
(c) 0 to 10 wt.-% of the at least one additive (C), preferably 0.1 to 7 wt.-%, in particular 0.5 to 5 wt.-%,

wherein the constituents (A), (B) and (C) sum up to 100 wt.-% of the thermoplastic elastomer composition (E).

In one embodiment of the invention, the thermoplastic elastomer composition (E) preferably comprises > 30 wt.-% of the at least one block copolymer (B), for example 31 to 50 wt.-% or 32 to 45 wt.-%.

The thermoplastic elastomer composition (E) preferably has a Shore hardness ≤ 70 Shore A according to DIN ISO 7619-1, more preferably ≤ 65 Shore A, in particular ≤ 60 Shore A.

The thermoplastic elastomer composition (E) has a rebound resilience between 25 to 60 % according to DIN 53512, more preferably between 30 to 55 %, in particular between 30 to 50 %. It has surprisingly been found by the inventors that thermoplastic elastomer compositions (E) having rebound resilience values within this range, in particular between 30 to 50 %, show excellent results with respect to slip resistance.

The thermoplastic elastomer composition (E) preferably does not contain substantial amounts (i.e. not more than 5 wt.%, based on the total weight of the thermoplastic elastomer composition (E), more preferably not more than 2 wt.-% and in particular not more than 1 wt.-%) of (styrene-ethylenebutylene-styrene) block copolymer (SEBS), (styrene-ethylene-propylene-styrene) block copolymer (SEPS), styrene-ethylene-ethylene-propylene-styrene) block copolymers (SEEPS), (styrene-butadiene-styrene) block copolymers (SBS), and/or (acrylonitrile-butadiene-styrene) copolymers (ABS). More preferably, the thermoplastic elastomer composition (E) does not contain (styrene-ethylene-butylene-styrene) block copolymer (SEBS), (styrene-ethylene-propylene-styrene) block copolymer (SEPS), styrene-ethylene-ethylene-propylene-styrene) block copolymers (SEEPS), (styrene-butadiene-styrene) block copolymers (SBS), and/or (acrylonitrile-butadiene-styrene) copolymers (ABS, i.e. contains 0 wt.%, based on the total weight of the thermoplastic elastomer composition (E), of the afore mentioned block copolymers.

In a further preferred embodiment, the thermoplastic elastomer composition (E) preferably does not contain substantial amounts (i.e. not more than 5 wt.%, based on the total weight of the thermoplastic elastomer composition (E), more preferably not more than 2 wt.-% and in particular not more than 1 wt.-%) of styrenic block copolymers other than block copolymers (B) described herein. More preferably, the thermoplastic elastomer composition (E) does not contain styrenic block copolymers, i.e. contains 0 wt.-%, based on the total weight of the thermoplastic elastomer composition (E), styrenic block copolymers other than block copolymers (B) described herein.

In a further preferred embodiment, the thermoplastic elastomer composition (E) preferably does not contain substantial amounts (i.e. not more than 5 wt.%, based on the total weight of the thermoplastic elastomer composition (E), more preferably not more than 2 wt.-% and in particular not more than 1 wt.-%) of polymers comprising repeating units derived from vinyl aromatic monomers, in particular styrenic monomers, other than the block copolymers (B) described herein. More preferably, the thermoplastic elastomer composition (E) does not contain block copolymers, i.e. contains 0 wt.-%, based on the total weight of the thermoplastic elastomer composition (E), polymers comprising repeating units derived from vinyl aromatic monomers, in particular styrenic monomers, other than the block copolymers (B) described herein.

The block copolymer (B) may, however, comprise further polymers selected from poly(styrene-b-isoprene-b-styrene and poly(styrene-b-isobutylene-b-butadiene-b-styrene) in amounts of up to 5 wt.- %, preferably not more than 2 wt.-%, based on total weight of the block copolymer (B). Preferably, however, the block copolymer (B) as well as the thermoplastic elastomer composition (E) does not comprise polymers selected from poly(styrene-b-isoprene-b-styrene) and poly(styrene-b-isobutylene-b-butadiene-b-styrene).

In a further preferred embodiment, the thermoplastic elastomer composition (E) preferably does not contain substantial amounts (i.e. not more than 5 wt.%, based on the total weight of the thermoplastic elastomer composition (E), more preferably not more than 3 wt.-% and in particular not more than 2 wt.-%) of polyolefins. More preferably, the thermoplastic elastomer composition (E) does not contain polypropylene, i.e. contains 0 wt.-%, based on the total weight of the thermoplastic elastomer composition (E), polypropylene.

The thermoplastic elastomer composition (E) as described herein can advantageously be used as soling material for producing outer shoe soles or parts of outer shoe soles. It has been surprisingly found that the thermoplastic elastomer composition (E) according to the present invention is capable to pass SRA, SRB and SRC test according to EN 13287 (2020) when used as soling material. The thermoplastic elastomer composition (E) according to the present invention exhibits superior properties compared to conventional materials. For example, the thermoplastic elastomer composition (E) when used as soling material can exhibit a SRA forward heel slip according to EN 13287 (2020) of ≥ 0.40 and a SRA forward flat slip according to EN 13287 (2020) of ≥ 0.40. At the same time, the thermoplastic elastomer composition (E) when used as soling material may exhibit a SRB forward heel slip according to EN 13287 (2020) of ≥ 0.15 and a SRB forward flat slip according to EN 13287 (2020) of ≥ 0.20.

Furthermore, thermoplastic elastomer composition (E) allows an easy preparation and processing. As described herein below, the thermoplastic elastomer composition (E) is preferably prepared by extrusion, dry blending, and/or manual mixing. The thermoplastic elastomer composition (E) is preferably transparent, translucence or opaque in the absence of additives (C) which may adversely affect these characteristics (e.g. in particular colorants). The transparency of the final product further increases the freedom of design in the desired application.

A further object of the invention is an article (T) formed from a thermoplastic elastomer composition (E) according to the invention. The article (T) may be obtained by molding processes, extruding processes, thermoforming processes, lamination processes, calendaring processes, and/or 3D printing processes. The article (T) is advantageously used as material for products when improved slip resistance is required, e.g. as soling material. In a preferred embodiment, the article (T) is a soling material, in particular as a soling material for safety footwear.

Aromatic thermoplastic polyurethane (Component A)

The thermoplastic elastomer composition (E) comprises at least one aromatic thermoplastic polyurethane (A), wherein the at least one aromatic thermoplastic polyurethane (A) is at least one transparent, translucence or opaque aromatic thermoplastic polyurethane (A). The at least one aromatic thermoplastic polyurethane (A), is at least one selected from a polyester type aromatic thermoplastic polyurethane (A-1) having a Shore hardness according to DIN ISO 7619-1 of 55 to 75 Shore A, and a polyether type aromatic thermoplastic polyurethane (A-2) having a Shore hardness according to DIN ISO 7619-1 of 20 Shore A to 80 Shore D. Mixtures of the before mentioned aromatic thermoplastic polyurethanes are also encompassed within the meaning of this invention.

Aromatic thermoplastic polyurethanes (A) can be obtained from the reaction (polyaddition) of a reaction mixture comprising at least one at least partially aromatic diisocyanate, at least one polyol selected from polyether polyols and polyester polyols, and optionally at least one chain extender.

Preferred aromatic diisocyanates which are suited for the production of the at least one aromatic thermoplastic polyurethane (A) may for example be selected from 2,4-tolylene diisocyanate, mixtures of 2,4- and 2,6-tolylene diisocyanate, 3,3'-dimethyl-4,4'-biphenyl diisocyanate, p-phenylene diisocyanate (PDI), m-,p-xylylene diisocyanate (XDI), 4,4'-, 2,4'- and 2,2'-diphenylmethane diisocyanate (MDI), mixtures of 2,4'- and 4,4'-diphenylmethane diisocyanate, urethane-modified liquid 4,4'- and/or 2,4-diphenylmethane diisocyanates, 4,4'-diisocyanatodiphenylethane (1,2) (EDI) and 1,5-naphthylene diisocyanate.

Suitable polyols are reactive toward isocyanates and include preferably polyether polyols, and/or polyester polyols, . The polyols mentioned can be used as individual components or in the form of mixtures.

The reaction mixtures for producing the aromatic thermoplastic polyurethanes (A) are preferably based at least predominantly on difunctional polyols, which are reactive toward isocyanates. The aromatic thermoplastic polyurethanes (A) are therefore predominantly unbranched.

Suitable polyether polyols can be prepared according to known processes, for example by anionic polymerization or by cationic polymerization from one or more alkylene oxides having 2 to 4 carbon atoms in the alkylene radical and optionally a starter molecule. As alkylene oxides, specifically mentioned are ethylene oxide, 1,2-propylene oxide, tetrahydrofuran, 1,2- and 2,3-butylene oxide. Suitable polyester polyols can, e.g. be derived from dicarboxylic acids with 2-12 carbon atoms, preferably 4-8 carbon atoms, and polyhydric alcohols. Suitable dicarboxylic acids include aliphatic dicarboxylic acids, e.g. succinic acid, glutaric acid, suberic acid, azelaic acid, sebacic acid and preferably adipic acid and aromatic dicarboxylic acids, e.g. phthalic-, isophthalic- and terephthalic acid.

Examples of polyhydric alcohols are alkanediols having 2 to 10, preferably 2 to 6, carbon atoms. Particular preferred chain extenders are alkanediols having 2 to 6 carbon atoms in the alkylene radical, in particular 1,4-butanediol and/or dialkylene glycols having 4 to 8 carbon atoms.

To adjust the hardness of the aromatic thermoplastic polyurethanes (A), the polyols and chain extenders are usually used in a molar ratio polyol:chain extender of 1: 0.8 to 1:10, preferably 1: 1 to 1:6.4, the hardness of the aromatic thermoplastic polyurethanes (A) increases with increasing content of diols.

The aromatic thermoplastic polyurethanes (A) used in the thermoplastic elastomer composition (E) according to the invention are generally aromatic thermoplastic polyurethanes which are obtainable by known processes from the reaction of aromatic diisocyanates, polyols and optionally chain extenders, if appropriate in the presence of catalysts and/or additives. The ratio of the isocyanate groups of the diisocyanate to the sum of those reactive towards the isocyanates groups of polyols and optional chain extenders is usually 1: 0.9 to 1: 1.1.

The at least one aromatic thermoplastic polyurethane (A) is selected from:

   (a-1) 0 to 100 wt.-% of at least one polyester type aromatic thermoplastic polyurethane (A-1) having a Shore hardness according to DIN ISO 7619-1 of 55 to 75 Shore A; and
   (a-2) 0 to 100 wt.-% of at least one polyether type aromatic thermoplastic polyurethane (A-2) having a Shore hardness according to DIN ISO 7619-1 of 20 Shore A to 80 Shore D;
   or mixtures of components (A-1) and (A-2) , wherein the components (A-1) and (A-2) sum up to 100 wt.-% of the aromatic thermoplastic polyurethane (A).

In one preferred embodiment, the at least one aromatic thermoplastic polyurethane (A) is a polyester type aromatic thermoplastic polyurethane having a Shore hardness of 55 to 75 Shore A, more preferably 55 to 65 Shore A according to DIN ISO 7619-1.

In an alternative preferred embodiment, the at least one aromatic thermoplastic polyurethane (A) is a polyether type aromatic thermoplastic polyurethane having a Shore hardness between 20 Shore A to 80 Shore D, preferably 50 to 80 Shore A, preferably 55 to 75 Shore A, more preferably 55 to 65 Shore A, according to DIN ISO 7619-1.

The preparation of the aromatic thermoplastic polyurethanes (A) starting from least one diisocyanate, at least one polyol and optionally chain extenders is generally known and has been described in the art.

Optionally, additives are added during the production of the aromatic thermoplastic polyurethane (A) to improve the properties and/or the processability. Suitable preferred additives are described below. The aromatic thermoplastic polyurethanes (A) produced in this way can then be pelleted or granulated, or directly mixed with the block copolymer (B) and optionally further additives (C) to obtain a homogeneous thermoplastic elastomer composition (E) according to the invention.

Suitable aromatic thermoplastic polyurethanes are commercially available, e.g. under the trade name Elastollan® from BASF SE, in particular Elastollan 565A12P and/or Elastollan 1155A12P.

Block copolymer (Component B)

According to the invention, the thermoplastic elastomer composition (E) comprises at least one block copolymer (B) comprising:

(B-1) at least one polymer block (B-1) substantially consisting of repeating units derived from at least one vinyl aromatic monomer (also called hard block or hard segment), and
(B-2) at least one polymer block (B-2) substantially consisting of repeating units derived from isobutylene (also called soft block or soft segment),
wherein the at least one block copolymer (B) is preferably at least partially hydrogenated.

The structure of the at least one block copolymer (B) is not particularly limited. For example, a block copolymer (B) includes diblock copolymers comprising one polymer block (B-1) containing repeating units derived from at least one vinyl aromatic monomer and one polymer block (B-2) containing repeating units derived from isobutylene. Also included are triblock copolymers comprising at least one polymer block (B-1) and at least one polymer block (B-2), preferably comprising two polymer block (B-1) and one polymer block (B-2). Further embodiments include multiblock copolymers comprising at least two polymer block (B-1) and at least one polymer block (B-2). Still further embodiments include star block copolymers comprising arms having at least one polymer block (B-1) and at least one polymer block (B-2). In a preferred embodiment, the terminal polymer block of the at least one block copolymer (B) is constituted by a polymer block (B-1). In the present invention, in order to obtain desired physical properties and moldability, the at least one block copolymer (B) having these structures may be used alone or in combination of two or more.

In the at least one block copolymer (B), a weight ratio of a polymer block (B-1) and a polymer block (B-2) is from 15/85 to 30/70.

The polymer block (B-1) substantially consisting of repeating units derived from at least one vinyl aromatic monomer is formed by polymerizing a vinyl aromatic monomer as a main component. Preferably, the at least one vinyl aromatic monomer is selected from styrene, alpha-methylstyrene, and vinyltoluene, more preferably styrene, alpha-methylstyrene or a mixture thereof.

Preferably, the polymer block (B-1) comprises (preferably consists of) from 90 to 100 % by weight, preferably 95 to 100 % by weight, more preferably 98 to 100 % by weight, based on the total polymer block (B-1), of repeating units derived from vinyl aromatic monomers, in particular styrene, and from 0 to 10 % by weight, preferably 0 to 5 % by weight, more preferably 0 to 2 % by weight, based on the total polymer block (B-1), of repeating units derived from isobutylene.

The at least one polymer block (B-2) is formed by polymerizing isobutylene as a main component.

Preferably, the polymer block (B-2) comprises (preferably consists of) from 0 to 10 % by weight, preferably 0 to 5 % by weight, based on the total polymer block (B-2), of repeating units derived from vinyl aromatic monomers, in particular styrene, and from 90 to 100 % by weight, preferably 95 to 100 % by weight, based on the total polymer block (B-2), of repeating units derived from isobutylene.

The method for producing a block copolymer (B) is not particularly limited. Suitable processes are known in the art. For example, it can be produced by polymerizing a vinyl aromatic monomer component to form at least one polymer block (B-1) in the presence of an initiator followed by the addition of repeating units derived from isobutylene to form at least one polymer block (B-2). Preferably, the block copolymer (B) is produced in a controlled fashion, e.g. by cationic or anionic polymerization. Suitable processes and initiators are known in the art. WO 2016/093091 A1 discloses particularly preferred processes and initiators for cationic polymerization processes.

The at least one block copolymer (B) is preferably a block copolymer comprising at least two polymer blocks (B-1) comprising ≥ 90 wt.-% of repeating units derived from styrene and at least one polymer block (B-2) comprising ≥ 90 wt.-% of repeating units derived from isobutylene.

In a further preferred embodiment, the at least one block copolymer (B) is a triblock copolymer (B-1/B-2/B-1), more preferably poly(styrene-b-isobutylene-b-styrene). In a preferred embodiment, the block copolymer (B) is at least partially hydrogenated.

In a further preferred embodiment of the invention, the at least one block copolymer (B) is selected from poly(styrene-b-isobutylene-b-styrene), wherein at least 90 mol-% of the non-conjugated double bonds in the block copolymer (B) are hydrogenated, preferably at least 95 mol-%, and in particular at least 98 mol-%. In a still further preferred embodiment, the at least one block copolymer (B) is selected from poly(styrene-b-isobutylene-b-styrene), wherein all of the non-conjugated double bonds of the block copolymer (B) are hydrogenated.

Non-conjugated double bonds of the at least one block copolymer (B) are typically present in the polymer blocks (B-2) (also called soft blocks) prior to hydrogenation, whereas the polymer blocks (B-1) (also called hard blocks) typically do not contain non-conjugated double bonds (i.e. only conjugated double bonds are typically present in the polymer blocks (B-1)). This means, that in a preferred embodiment, the at least one block copolymer (B) is selected from poly(styrene-b-isobutylene-b-styrene), wherein at least 90 mol-% of the double bonds in the polymer block(s) (B-2) of the block copolymer (B) are hydrogenated, preferably at least 95 mol-%, and in particular at least 98 mol-%. In a still further preferred embodiment, at least one block copolymer (B) is selected from poly(styrene-b-isobutylene-b-styrene), wherein all of the double bonds in the polymer block(s) (B-2) of the block copolymer (B) are hydrogenated. Suitable methods for hydrogenation are known in the art.

In a particular preferred embodiment of the invention, the at least one block copolymer (B) is represented by a poly(styrene-b-isobutylene-b-styrene) wherein at least 90 mol-% of the non-conjugated double bonds in the poly(styrene-b-isobutylene-b-styrene) are hydrogenated, preferably at least 95 mol-%, and in particular at least 98 mol-%. In a still further preferred embodiment, at least one block copolymer (B) is selected from poly(styrene-b-isobutylene-b-styrene), wherein all (100 mol-%) of the non-conjugated double bonds are hydrogenated (i.e. double bonds in the isobutylene block (soft block (B-2)).

Optionally, additives are added during the production of the block copolymer (B) to improve the properties and/or the processability. Suitable preferred additives are described below. The block copolymer (B) produced in this way can then be pelleted or granulated, or directly mixed with the at least one thermoplastic polyurethane (A) and optionally further additives (C) to obtain a homogeneous thermoplastic elastomer composition (E) according to the invention.

SIBSTAR (manufactured by Kaneka Corporation) is an example of a commercially available product that can be used as a block copolymer (B), in particular Sibstar 062T.

Optional the at least one additive (Component C)

The thermoplastic elastomer composition (E) according to the invention may optionally comprise at least one additive (C) in addition to components (A) and (B). In a preferred embodiment, the thermoplastic elastomer composition (E) according to the invention comprises at least one additive (C) in addition to components (A) and (B). Preferred additives (C) comprise for example plasticizers, lubricants, abrasion improvement additives, propellants, surface-active substances, flame retardants, demolding agents, colorants, stabilizers against light, heat or oxidation, and/or reinforcing agents.

Preferably, the thermoplastic elastomer composition (E) comprises at least one additive (C) selected from lubricants, plasticizers, abrasion improvement additives and/or mixtures thereof.

Suitable lubricants include any lubricant known in the art such. Stearyl alcohols, alkyl stearates and amides, preferably of the Irganox® type, as well as esters of pentaerythritol with long-chain fatty acids are to be mentioned here. Also calcium, zinc or aluminum salts of stearic acid and dialkyl ketones, for example distearyl ketone, may be used. Further, ethylene oxide-propylene oxide copolymers may be used as lubricants and release agents. Furthermore, natural and synthetic waxes can be used. These include polypropylene waxes, polyethylene waxes, polyamide waxes, PO grafted waxes, high density polyethylene waxes, poly(tetrafluoroethene) waxes, ethylene bis(stearamide) waxes, montane wax, carnauba waxes and bees waxes.

Suitable plasticizers include benzoates, phthalates and phosphoric esters.

Suitable abrasion improvement additives include silicones, waxes, fluorinated polymers and oligomers, ethylene polymers and oligomers. Moreover, suitable lubricants may be used as abrasion improvement additives.

Suitable antioxidants may be any antioxidant known in the art such as, e.g., a phenolic antioxidant (e.g., an alkylated monophenol, an ester an sterically hindered amide such as, e.g., 3,5-di-tert butyl-4-hydroxyphenyl-propionic acid, 2,6-ditert-butyl-4-methylphenol, pentaerythrityl-tetrakis-[3-(3,5-ditert-butyl-4-hydroxyphenyl)-propionate, N,N'-di-(3,5-ditert-butyl-4-hydroxyphenyl-propionyl)-hexamethylendiamine, or a benzotriazole). Exemplarily, an antioxidant may be such as enlisted in EP-A 0 698 637 and/or EP-A 0 669 367.

Suitable propellants include chemical and physical propellants.

Surface-active substances may be any emulsifier known in the art such as, e.g., an alkaline salt of an alkylic sulfonic acid or an alkylarylic sulfonic acid, an alkylsulfate or a resinate, in particular an alkaline salt of a fatty acid of 8-30 carbon atoms.

Flame retardants can be both halogen-containing and halogen-free compounds. Suitable halogen-containing compounds remain stable in the manufacture and processing of the thermoplastic elastomer composition (E). Brominated compounds are preferable over the respective chlorinated compounds. Halogen-free compounds such as phosphorus compounds, in particular phosphine oxides and derivatives of acids of phosphorus and salts of acids and acid derivatives of phosphorus are preferably used. Particularly preferred phosphorus compounds comprise ester, alkyl, cycloalkyl and / or aryl groups.

Suitable demolding additives may be selected from long-chain fatty acids, such as stearic acid or behenic acid, salts of fatty acids (e.g. calcium stearate or zinc stearate), esters of fatty acids (e.g. stearyl stearate or pentaerythritol tetrastearate), amide derivatives of fatty acids (e.g. ethylenebisstearylamide, erucamide, Acrawax®), phosphates (such as tricalcium phosphate), hydrocarbon waxes, such as microcrystalline waxes and paraffin waxes (e.g. Besquare®), and fumed silica (e.g. Aerosil®). Typically fatty acids are carboxylic acids having a linear or branched, saturated or unsaturated $C_5$-$C_{25}$ alkyl chain.

Suitable colorants include dyes and pigments for coloring thermoplastics and are commonly known, see for example R. Gächter and H. Müller, Taschenbuch der Kunststoffadditive, Carl Hanser Verlag, 1983, pages 494 to 510.

All conventional light stabilizers can be used as light stabilizers are, for example, compounds based on various substituted resorcinols, salicylates, benzophenone, benzotriazole, cinnamic acid, organic phosphites and phosphonites as well as sterically hindered amines.

Examples of oxidation inhibitors and heat stabilizers are sterically hindered phenols.

Preferred is the use of a stabilizer, in particular oxygen radical scavengers such as Irganox® 1010 (BASF SE), Songnox® 1010, Irganox® 1076, Irganox® 565 and blends thereof, carbon radical scavengers such as Sumilizer® GS, Sumilizer® GM and blends thereof, and/or secondary stabilizers such as Irgafos® 168 (BASF SE). Said stabilizers are commercially available.

Reinforcing agents may for example include particulate mineral fillers (e.g. amorphous silica, carbonates such as magnesium carbonate, calcium carbonate (chalk), powdered quartz, mica, variety of silicates such as clays, muscovite, biotite, suzorite, tin maletit, talc, chlorite, phlogopite, feldspar, calcium silicates such as wollastonite or kaolin, particularly calcined kaolin) and/or fibrous fillers (e.g. carbon fibres, glass fibres, aramide fibres).

More details about the above-mentioned additives can be found in the technical literature, e.g. in Plastics Additive Handbook, 5th edition, H. Zweifel, ed., Hanser Publishers, Munich, 2001.

The at least one additive (C) can be added during the production of the thermoplastic elastomer composition (E). Alternatively, the at least one additive (C) can be added during the production of the at least one aromatic thermoplastic polyurethane (A) and/or during the production of the at least one block copolymer (B). Often, the at least one additive (C) also improves the properties, in particular the stability and processability of the at least one aromatic thermoplastic polyurethane (A) and/or block copolymer (B) and are therefore at least partially added to the at least one aromatic thermoplastic polyurethane (A) and/or to the at least one block copolymer (B) prior to the preparation of the thermoplastic elastomer composition (E).

The remaining or total amount of the at least one additive (C) can, however, be added during the process for producing the thermoplastic elastomer composition (E) by blending the components (A), (B) and (C).

Optional additives (C) are preferably added in an amount of 0 to 10 wt.-%, more preferably 0.1 to 7 wt.-%, and in particular 0.1 to 5 wt.-%, based on the total weight of the thermoplastic elastomer composition (E). Preferably, the thermoplastic elastomer composition (E) may comprise from 0.01 to 10 % by weight, preferably 0.1 to 5, more preferably 0.1 to 2.5 % by weight, of the at least one additive (C).

Preferably, the additives used in the inventive polymer composition as optional additive (C) are not scattering light in order to maintain transparency of the polymer composition.

Preparation of the thermoplastic elastomer composition (E)

The thermoplastic elastomer composition (E) is preferably prepared by extrusion, dry blending, and/or manual mixing.

When components (A) and (B) and optionally (C) are mixed, these are preferred in a flowable, softened or melted state. The components are preferably mixed homogeneously at temperatures above the melting temperatures of components (A) and (B). Preferably, the mixing of the components (A) and (B) and optionally (C) takes place at 160 to 250°C, preferably 175 to 240°C, particularly preferably 190 to 230°C. Mixing the components (A) and (B) and optionally (C) to a homogeneous product can be achieved by conventional devices, including devices for heating and stirring, kneading or rolling. The preparation of the thermoplastic elastomer composition can be carried out continuously or discontinuously with or without degassing. Mixing is preferably carried out in a conventional extruder. The obtained thermoplastic elastomer compositions (E) according to the invention can be pelleted or granulated by generally known methods. Alternatively, the thermoplastic elastomer composition (E) can be extruded and directly processed to the desired articles (T), e.g. by molding processes, extruding processes, thermoforming processes, lamination processes, calendaring processes, and/or 3D printing processes.

The invention is further illustrated by the following examples and claims.

Examples

Various thermoplastic elastomer compositions were prepared and homogenized in a twin-screw extruder and a single-screw extruder at a temperature of 190°C to 230°C according to the compositions disclosed in Table 1. The obtained transparent test specimen were prepared and characterized by the following tests.

SRA, SRB and SRC Standard

The safety shoe test according to EN ISO 13287 (2020) consists of two subtests:
SRA evaluates the slip resistance on ceramic tile with soapy water as lubricant. The SRA standard is passed, if a forward heel slip $\geq 0.28$ and a forward flat slip $\geq 0.32$ is achieved. SRB evaluates the slip resistance on steel with glycerin as an oil. The SRB standard is passed, if a forward heel slip $\geq 0.13$ and a forward flat slip $\geq 0.18$ is achieved. The SRC standard is passed if SRA standard and SRB standard is passed for the same material.

Glass transition temperature Tg(E)

The glass transition temperature Tg(E) is determined by measuring the glass transition temperatures Tg of components A and B by dynamic mechanical analysis (DMA) at 1 Hz according to ISO 6721-2.
The glass transition temperature Tg(E) of composition (E) is then calculated by the following equation as described herein above:

$$Tg\,(E) = \frac{1}{\frac{w(A)}{Tg(A)} + \frac{w(B)}{Tg(B)} + \cdots + \frac{w(X)}{Tg(X)}}$$

Reference is made to: Prediction of glass transition temperatures: Binary blends and copolymers; W. Brostow, R. Chiu, A. Vassilikou-Dova; Materials Letter 62 (2008); 3152-3155.
To determine the glass transition temperatures Tg of components A and B, a strip-shaped test specimen (rectangular shape) is firmly clamped vertically at its ends and subjected to sinusoidal torsion by a motor coupled to the lower bracket. This is done by default with a frequency of 1 Hz and a material-dependent angle of rotation (amplitude). A load cell attached to the upper strip holder registers the resulting torque. From the torque, the angle of rotation and the phase shift between the two, together with the data on the sample geometry, the shear modulus and loss factor can be determined. The measurements are usually carried out in a predefined temperature interval with continuous heating of the sample in a temperature chamber, so that the result is the complex shear modulus that is measured as a function of the temperature. The measurements are made in accordance with ISO 6721-2. In particular, glass transitions can be determined very precisely as a tan delta. In addition, these measurements serve to characterize the damping and softening behavior as a function of the temperature.
With respect to the glass transition temperatures and weight proportions of components A, B, and PP (i.e. the constituents having a glass transition temperature) in the tables below, the following equation was used for the calculation of Tg(E), which includes the required conversion of the data given in the tables (e.g. conversion of °C to K):

$$Tg\,(E) = \frac{1}{\frac{\left[\frac{w(A)}{100}\right]}{(273.15 + Tg(A))} + \frac{\left[\frac{w(B)}{100}\right]}{(273.15 + Tg(B))}}$$

and

$$Tg\,(E) = \cfrac{1}{\cfrac{\left[\frac{w(A)}{100}\right]}{(273.15 + Tg(A))} + \cfrac{\left[\frac{w(B)}{100}\right]}{(273.15 + Tg(B))} + \cfrac{\left[\frac{w(PP)}{100}\right]}{(273.15 + Tg(PP))}}$$

Shore Hardness is determined according to DIN ISO 7619-1 (3s).

Rebound resilience is determined according to DIN 53512.

Components used

A1 aromatic thermoplastic polyurethane of the polyester type having a Shore hardness of 65 Shore A according to DIN ISO 7619-1 (3s), further comprising lubricants and plasticizers (Elastollan 565A12P, BASF)

A2 aromatic thermoplastic polyurethane of the polyether type having a Shore hardness of 55 Shore A according to DIN ISO 7619-1 (3s), further comprising lubricants and plasticizers (Elastollan 1155A12P, BASF)

A3 aromatic thermoplastic polyurethane of the polyether type having a Shore hardness of 74 Shore D according to DIN ISO 7619-1 (3s), further comprising lubricants and plasticizers (Elastollan 1174D11, BASF)

A4 Aromatic thermoplastic polyurethane of the polyether type having a Shore hardness of 80 Shore A according to DIN ISO 7619-1 (3s), further comprising lubricants (Elastollan 1180A10, BASF)

B1 Sibstar 062T: (Styrene/iso-Butylene/Styrene) copolymer with saturated (i.e. hydrogenated) soft segments

B2 Kraton G 1651: clear, linear triblock copolymer based on styrene and ethylene/butylene (S-E/B-S), with bound styrene of 31.5% mass (Kraton)

B3 Novodur: acrylonitrile butadiene styrene (ABS) copolymer (INEOS Styrolution)

B4 Kraton D-1161: non-hydrogenated styrene/isoprene/styrene (SIS) block copolymer

B5 Kraton D 1171: Triblock copolymer based on styrene, butadiene and isoprene (SIBS block copolymer)

PP Bormed: Polypropylene from Borealis

Table 1. Examples 1 to 3: Compositions and Properties.

|  | Ex. 1 | Ex. 2 | Ex. 3 |
|---|---|---|---|
| A1 [wt.-%] | 80 | - | - |
| A2 [wt.-%] | - | 80 | 60 |
| A3 [wt.-%] | - | - | - |
| A4 [wt.-%] | - | - | - |
| B1 [wt.-%] | 20 | 20 | 40 |
| B2 [wt.-%] | - | - | - |
| B3 [wt.-%] | - | - | - |
| B4 [wt.-%] | - | - | - |
| B5 [wt.-%] | - | - | - |
|  |  |  |  |
| SRA |  |  |  |
| forward heel slip $\geq$ 0.28 | 0.42 | 0.48 | 0.57 |
| forward flat slip $\geq$ 0.32 | 0.41 | 0.49 | 0.60 |
|  |  |  |  |
| SRB |  |  |  |
| forward heel slip $\geq$ 0.13 | 0.19 | 0.18 | 0.32 |
| forward flat slip $\geq$ 0.18 | 0.25 | 0.21 | 0.35 |
|  |  |  |  |
| SRC | Pass | Pass | Pass |

(continued)

| | Ex. 1 | Ex. 2 | Ex. 3 |
|---|---|---|---|
| | | | |
| Shore Hardness composition E (DIN ISO 7619-1 (3s)) | 57 | 47 | 43 |
| Tg component A [°C] | -25 | -45 | -45 |
| Tg component B [°C] | -55 | -55 | -55 |
| Tg composition E [°C] | -32 | -47 | -49 |
| Rebound resilience composition E % (DIN 53512) | 46 | 49 | 32 |

Table 2. Comparative Examples 1 to 4: Compositions and Properties.

| | Comp. Ex. 1 | Comp. Ex. 2 | Comp. Ex. 3 | Comp. Ex. 4 |
|---|---|---|---|---|
| A1 [wt.-%] | 100 | - | 80 | - |
| A2 [wt.-%] | - | 100 | - | 80 |
| A3 [wt.-%] | - | - | - | - |
| A4 [wt.-%] | - | - | - | - |
| B1 [wt.-%] | - | - | - | - |
| B2 [wt.-%] | - | - | 20 | - |
| B3 [wt.-%] | - | - | - | 20 |
| B4 [wt.-%] | - | - | - | - |
| B5 [wt.-%] | - | - | - | - |
| | | | | |
| SRA | | | | |
| forward heel slip ≥ 0.28 | 0.40 | 0.32 | 0.37 | 0.33 |
| forward flat slip ≥ 0.32 | 0.38 | 0.33 | 0.40 | 0.28 |
| SRB | | | | |
| forward heel slip ≥ 0.13 | 0.08 | 0.11 | 0.13 | 0.12 |
| forward flat slip ≥ 0.18 | 0.10 | 0.14 | 0.15 | 0.14 |
| SRC | Fail | Fail | Fail | Fail |
| | | | | |
| Shore Hardness composition E (DIN ISO 7619-1 (3s)) | 65 | 55 | 55 | 69 |
| Tg component A [°C] | -25 | -45 | -25 | -45 |
| Tg component B [°C] | - | - | -53 | 80 |
| Tg composition E [°C] | - | - | -31 | -28 |
| Rebound resilience composition E % (DIN 53512) | 53 | 54 | 51 | 52 |

Table 3. Comparative Examples 5 to 9: Compositions and Properties.

| | Comp. Ex. 5 | Comp. Ex. 6 | Comp. Ex. 7 | Comp. Ex. 8 | Comp. Ex. 9 | Comp. Ex. 10 |
|---|---|---|---|---|---|---|
| A1 [wt.-%] | 80 | - | 80 | - | - | - |

(continued)

| | Comp. Ex. 5 | Comp. Ex. 6 | Comp. Ex. 7 | Comp. Ex. 8 | Comp. Ex. 9 | Comp. Ex. 10 |
|---|---|---|---|---|---|---|
| A2 [wt.-%] | - | 80 | - | 80 | - | - |
| A3 [wt.-%] | - | - | - | - | 80 | - |
| A4 [wt.-%] | - | - | - | - | - | 16.5 |
| B1 [wt.-%] | - | - | - | - | 20 | 67 |
| B2 [wt.-%] | - | - | - | - | - | - |
| B3 [wt.-%] | - | - | - | - | - | - |
| B4 [wt.-%] | 20 | 20 | - | - | - | - |
| B5 [wt.-%] | - | - | 20 | 20 | - | - |
| PP [wt.-%] | - | - | - | - | - | 16.5 |
| | | | | | | |
| SRA | | | | | | |
| forward heel slip ≥ 0.28 | 0.48 | 0.40 | 0.44 | 0.40 | 0.37 | 0.43 |
| forward flat slip ≥ 0.32 | 0.37 | 0.34 | 0.34 | 0.34 | 0.35 | 0.39 |
| | | | | | | |
| SRB | | | | | | |
| forward heel slip ≥ 0.13 | 0.15 | 0.13 | 0.10 | 0.10 | 0.07 | 0.14 |
| forward flat slip ≥ 0.18 | 0.14 | 0.15 | 0.09 | 0.11 | 0.09 | 0.15 |
| | | | | | | |
| SRC | Fail | Fail | Fail | Fail | Fail | Fail |
| | | | | | | |
| Shore Hardness composition E (DIN ISO 7619-1 (3s)) | 56 | 47 | 63 | 56 | 62 (Shore D) | 56 |
| Tg component A [°C] | -25 | -45 | -25 | -45 | 50 | -40 |
| Tg component B [°C] | -65 | -65 | -65 | -65 | -55 | -65 |
| Tg compoment PP [°C] | - | - | - | - | - | -5 |
| Tg composition E [°C] | -34 | -49 | -34 | -49 | 21 | -53 |
| Rebound resilience composition E % (DIN 53512) | - | - | - | - | - | - |

Comparative Examples 1 and 2 (Table 2) demonstrate that pure aromatic thermoplastic polyurethane compounds fail to pass the SRA, SRB and SRC tests.

By replacing 20 wt.-% of the at least one aromatic thermoplastic polyurethane by (S-E/B-S) block copolymer (Comparative Example 3), ABS block copolymer (Comparative Example 4), SIS block copolymer (Comparative Examples 5 and 6), or SIBS block copolymer (Comparative Examples 7 and 8), improved anti-slip properties can be achieved, but, however, still fail to meet the requirements for the SRB and SRC tests.

Comparative Example 9 demonstrates that composites comprising an aromatic TPU and an styrene/iso-butylene/styrene block copolymer according to the invention, but fail to have a glass transition temperature Tg(E) below 10°C fails to meet the requirements of for the SRB and SRC tests as well.

Only the inventive Examples 1, 2 and 3 comprising combination of at least one aromatic thermoplastic polyurethane (A) and 20 wt.-% and 40 wt.-%, respectively, of at least one block copolymer (B) comprising at least one polymer block (B-1) substantially consisting of repeating units derived from at least one vinyl aromatic monomer, and at least one polymer block (B-2) substantially consisting of repeating units derived from isobutylene, wherein the at least one block copolymer (B) is at least partially hydrogenated; and wherein the thermoplastic elastomer composition (E) has a glass transition temperature Tg(E), determined as described herein, of < 0°C, and a rebound resilience between 25 to 60 % according to DIN 53512, and wherein the at least one aromatic thermoplastic polyurethane (A) is at least one transparent, translucence or opaque aromatic thermoplastic polyurethane (A), meet all requirements of the SRA, SRB and SRC tests under otherwise unchanged conditions.

Comparative Example 10 demonstrates that compositions as taught in WO 2009/069666 A1 comprising polypropylene are inferior with respect to their properties.

**Claims**

1.  Thermoplastic elastomer composition (E) comprising:

    (a) 50 to 95 wt.-% of at least one aromatic thermoplastic polyurethane (A),
    wherein the at least one aromatic thermoplastic polyurethane (A) is selected from:

       (a-1) a polyester type aromatic thermoplastic polyurethane (A-1) having a Shore hardness according to DIN ISO 7619-1 of 55 to 75 Shore A, and
       (a-2) a polyether type aromatic thermoplastic polyurethane (A-2) having a Shore hardness according to DIN ISO 7619-1 of 20 Shore A to 80 Shore D,
       or mixtures of components (A-1) and (A-2), wherein the components (A-1) and(A-2) sum up to 100 wt.-% of the aromatic thermoplastic polyurethane (A);

    (b) 5 to 50 wt.-% of at least one block copolymer (B) comprising:

       (B-1) at least one polymer block (B-1) substantially consisting of repeating units derived from at least one vinyl aromatic monomer, and
       (B-2) at least one polymer block (B-2) substantially consisting of repeating units derived from isobutylene, wherein the at least one block copolymer (B) is preferably at least partially hydrogenated; and wherein the weight ratio of (B-1) to (B-2) is from 15/85 to 30/70;

    and
    (c) 0 to 10 wt.-% of at least one optional additive (C),
    wherein the components (A), (B) and (C) sum up to 100 wt.-% of the thermoplastic elastomer composition (E), wherein the thermoplastic elastomer composition (E) has a glass transition temperature Tg(E) of < 0°C, calculated according to the following equation:

    $$Tg\,(E) = \cfrac{1}{\cfrac{w(A)}{Tg(A)} + \cfrac{w(B)}{Tg(B)}}$$

    wherein

       w(A) is the mass (weight) fraction of component A,
       w(B) is the mass (weight) fraction of component B,
       Tg(A) is the glass transition temperature of pure component A in Kelvin,
       Tg(B) is the glass transition temperature of pure component B in Kelvin, and
       Tg(E) is the glass transition temperature of composition E in Kelvin,
       wherein Tg(A) and Tg(B) are determined by dynamic mechanical analysis at 1 Hz according to ISO 6721-2, wherein the thermoplastic elastomer composition (E) has a rebound resilience between 25 to 60 % according to DIN 53512, and
       wherein the at least one aromatic thermoplastic polyurethane (A) is at least one transparent, translucence or opaque aromatic thermoplastic polyurethane (A).

2.  Thermoplastic elastomer composition (E) according to claim 1, wherein the thermoplastic elastomer composition (E) has a Shore hardness according to DIN ISO 7619-1 of < 85 Shore A.

3. Thermoplastic elastomer composition (E) according to claim 1 or 2, wherein the at least one aromatic thermoplastic polyurethane (A) is a reaction product of a reaction mixture comprising at least one aromatic diisocyanate, at least one polyol selected from polyether polyols, and/or polyester polyols, and optionally at least one chain extender.

4. Thermoplastic elastomer composition (E) according to any of claims 1 to 3, wherein the at least one block copolymer (B) is a block copolymer comprising at least two blocks comprising ≥ 90 wt.-% of repeating units derived from styrene and at least one block comprising ≥ 90 wt.-% of repeating units derived from isobutylene.

5. Thermoplastic elastomer composition (E) according to any of claims 1 to 4, wherein the at least one block copolymer (B) is a block copolymer selected from poly(styrene-b-isobutylene-b-styrene), wherein the at least one block copolymer (B) is preferably at least partially hydrogenated.

6. Thermoplastic elastomer composition (E) according to any of claims 1 to 5, wherein the thermoplastic elastomer composition (E) has a rebound resilience between 30 to 50 % according to DIN 53512.

7. Thermoplastic elastomer composition (E) according to any of claims 1 to 6, wherein the thermoplastic elastomer composition (E) is prepared by extrusion, dry blending, and/or manual mixing.

8. Thermoplastic elastomer composition (E) according to any of claims 1 to 7, wherein the thermoplastic elastomer composition (E) comprises at least one additive (C) selected from lubricants, plasticizers, abrasion improvement additives and mixtures thereof.

9. Thermoplastic elastomer composition (E) according to any of claims 1 to 7, wherein the thermoplastic elastomer composition (E) comprises 0 to 10 wt.-% of at least one additive (C) selected from abrasion improvement additives and mixtures thereof.

10. Thermoplastic elastomer composition (E) according to any of claims 1 to 9, wherein the thermoplastic elastomer composition (E) comprises at least one additive (C) selected from plasticizers and mixtures thereof.

11. Thermoplastic elastomer composition (E) according to any of claims 1 to 10, wherein the thermoplastic elastomer composition (E) is substantially free of (styrene-ethylene-butylene-styrene) block copolymer (SEBS), (styrene-ethylene-propylene-styrene) block copolymer (SEPS), styrene-ethylene-ethylene-propylene-styrene) block copolymers (SEEPS), (styrene-butadiene-styrene) block copolymers (SBS), and/or (acrylonitrile-butadiene-styrene) copolymers (ABS).

12. Use of a thermoplastic elastomer composition (E) according to any of claims 1 to 11 for the production of outer shoe soles or parts of outer shoe soles.

13. Article (T) formed from a thermoplastic elastomer composition (E) according to any of claims 1 to 11.

14. Article (T) according to claim 13, wherein the article (T) is obtained by molding processes, extruding processes, thermoforming processes, lamination processes, calendaring processes, and/or 3D printing processes.

15. Article (T) according to claim 13 or 14, wherein the article (T) is a soling material, in particular as a soling material for safety footwear.


**Patentansprüche**

1. Thermoplastische Elastomerzusammensetzung (E), umfassend:

(a) 50 bis 95 Gew.-% mindestens eines aromatischen thermoplastischen Polyurethans (A),
wobei das mindestens eine aromatische thermoplastische Polyurethan (A) ausgewählt ist aus:

(a-1) einem aromatischen thermoplastischen Polyurethan vom Polyestertyp (A-1) mit einer Shore-Härte nach DIN ISO 7619-1 von 55 bis 75 Shore A, und
(a-2) einem aromatischen thermoplastischen Polyurethan vom Polyethertyp (A-2) mit einer Shore-Härte nach DIN ISO 7619-1 von 20 Shore A bis 80 Shore D,

oder Mischungen der Komponenten (A-1) und (A-2), wobei die Komponenten (A-1) und (A-2) zusammen bis zu 100 Gew.-% des aromatischen thermoplastischen Polyurethans (A) ausmachen;

(b) 5 bis 50 Gew.-% mindestens eines Blockcopolymers (B), umfassend:

(B-1) mindestens einen Polymerblock (B-1), der im Wesentlichen aus Wiederholungseinheiten besteht, die von mindestens einem vinylaromatischen Monomer abgeleitet sind, und
(B-2) mindestens einen Polymerblock (B-2), der im Wesentlichen aus Wiederholungseinheiten besteht, die von Isobutylen abgeleitet sind,
wobei das mindestens eine Blockcopolymer (B) vorzugsweise zumindest teilweise hydriert ist;
und wobei das Gewichtsverhältnis von (B-1) zu (B-2) von 15/85 bis 30/70 ist;

und
(c) 0 bis 10 Gew.-% mindestens eines optionalen Zusatzstoffs (C),
wobei die Komponenten (A), (B) und (C) zusammen bis zu 100 Gew.-% der thermoplastischen Elastomerzusammensetzung (E) ausmachen,
wobei die thermoplastische Elastomerzusammensetzung (E) eine Glasübergangstemperatur Tg(E) von < 0°C aufweist, berechnet nach der folgenden Gleichung:

$$Tg\,(E) = \cfrac{1}{\cfrac{w(A)}{Tg(A)} + \cfrac{w(B)}{Tg(B)}}$$

wobei

w(A) der Massen-(Gewichts)-Anteil der Komponente A ist,
w(B) der Massen-(Gewichts)-Anteil der Komponente B ist,
Tg(A) die Glasübergangstemperatur der reinen Komponente A in Kelvin ist,
Tg(B) die Glasübergangstemperatur der reinen Komponente B in Kelvin ist, und
Tg(E) die Glasübergangstemperatur der Zusammensetzung E in Kelvin ist,
wobei Tg(A) und Tg(B) durch dynamisch-mechanische Analyse bei 1 Hz gemäß ISO 6721-2 bestimmt werden,
wobei die thermoplastische Elastomerzusammensetzung (E) eine Rückprallelastizität zwischen 25 bis 60 % nach DIN 53512 aufweist, und
wobei das mindestens eine aromatische thermoplastische Polyurethan (A) mindestens ein transparentes, transluzentes oder opakes aromatisches thermoplastisches Polyurethan (A) ist.

2. Thermoplastische Elastomerzusammensetzung (E) nach Anspruch 1, wobei die thermoplastische Elastomerzusammensetzung (E) eine Shore-Härte nach DIN ISO 7619-1 von < 85 Shore A aufweist.

3. Thermoplastische Elastomerzusammensetzung (E) nach Anspruch 1 oder 2, wobei das mindestens eine aromatische thermoplastische Polyurethan (A) ein Reaktionsprodukt einer Reaktionsmischung ist, die mindestens ein aromatisches Diisocyanat, mindestens ein Polyol, ausgewählt aus Polyetherpolyolen und/oder Polyesterpolyolen, und gegebenenfalls mindestens einen Kettenverlängerer umfasst.

4. Thermoplastische Elastomerzusammensetzung (E) nach einem der Ansprüche 1 bis 3, wobei das mindestens eine Blockcopolymer (B) ein Blockcopolymer ist, das mindestens zwei Blöcke mit ≥ 90 Gew.-% von Styrol abgeleiteten Wiederholungseinheiten und mindestens einen Block mit ≥ 90 Gew.-% von Isobutylen abgeleiteten Wiederholungseinheiten umfasst.

5. Thermoplastische Elastomerzusammensetzung (E) nach einem der Ansprüche 1 bis 4, wobei das mindestens eine Blockcopolymer (B) ein Blockcopolymer ist, das aus Poly(styrol-b-isobutylen-b-styrol) ausgewählt ist, wobei das mindestens eine Blockcopolymer (B) vorzugsweise zumindest teilweise hydriert ist.

6. Thermoplastische Elastomerzusammensetzung (E) nach einem der Ansprüche 1 bis 5, wobei die thermoplastische Elastomerzusammensetzung (E) eine Rückprallelastizität zwischen 30 bis 50 % nach DIN 53512 aufweist.

7. Thermoplastische Elastomerzusammensetzung (E) nach einem der Ansprüche 1 bis 6, wobei die thermoplastische Elastomerzusammensetzung (E) durch Extrusion, Trockenmischen und/oder manuelles Mischen hergestellt wird.

8. Thermoplastische Elastomerzusammensetzung (E) nach einem der Ansprüche 1 bis 7, wobei die thermoplastische Elastomerzusammensetzung (E) mindestens einen Zusatzstoff (C), ausgewählt aus Gleitmitteln, Weichmachern, Abriebverbesserungsadditiven und Mischungen davon, umfasst.

9. Thermoplastische Elastomerzusammensetzung (E) nach einem der Ansprüche 1 bis 7, wobei die thermoplastische Elastomerzusammensetzung (E) 0 bis 10 Gew.-% mindestens eines Zusatzstoffs (C), ausgewählt aus Abriebverbesserungsadditiven und Mischungen davon, umfasst.

10. Thermoplastische Elastomerzusammensetzung (E) nach einem der Ansprüche 1 bis 9, wobei die thermoplastische Elastomerzusammensetzung (E) mindestens einen Zusatzstoff (C), ausgewählt aus Weichmachern und Mischungen davon, umfasst.

11. Thermoplastische Elastomerzusammensetzung (E) nach einem der Ansprüche 1 bis 10, wobei die thermoplastische Elastomerzusammensetzung (E) im Wesentlichen frei ist von (Styrol-Ethylen-Butylen-Styrol)-Blockcopolymer (SEBS), (Styrol-Ethylen-Propylen-Styrol)-Blockcopolymer (SEPS), Styrol-Ethylen-Ethylen-Propylen-Styrol)-Blockcopolymeren (SEEPS), (Styrol-Butadien-Styrol)-Blockcopolymeren (SBS) und/oder (Acrylnitril-Butadien-Styrol)-Copolymeren (ABS).

12. Verwendung einer thermoplastischen Elastomerzusammensetzung (E) nach einem der Ansprüche 1 bis 11 zur Herstellung von Schuhlaufsohlen oder Teilen von Schuhlaufsohlen.

13. Artikel (T), gebildet aus einer thermoplastischen Elastomerzusammensetzung (E) nach einem der Ansprüche 1 bis 11.

14. Artikel (T) nach Anspruch 13, wobei der Artikel (T) durch Formgebungsverfahren, Extrudierverfahren, Thermoformverfahren, Laminierverfahren, Kalandrierverfahren und/oder 3D-Druckverfahren erhalten wird.

15. Artikel (T) nach Anspruch 13 oder 14, wobei der Artikel (T) ein Sohlenmaterial ist, insbesondere als ein Sohlenmaterial für Sicherheitsschuhwerk.

**Revendications**

1. Composition d'élastomère thermoplastique (E) comprenant :

    (a) 50 à 95 % en poids d'au moins un polyuréthane thermoplastique aromatique (A), l'au moins un polyuréthane thermoplastique aromatique (A) étant choisi parmi :

       (a-1) un polyuréthane thermoplastique aromatique de type polyester (A-1) ayant une dureté Shore selon la norme DIN ISO 7619-1 de 55 à 75 Shore A, et
       (a-2) un polyuréthane thermoplastique aromatique de type polyéther (A-2) ayant une dureté Shore selon la norme DIN ISO 7619-1 de 20 Shore A à 80 Shore D,
       ou des mélanges des composants (A-1) et (A-2), les composants (A-1) et (A-2) totalisant 100 % en poids du polyuréthane thermoplastique aromatique (A) ;

    (b) 5 à 50 % en poids d'au moins un copolymère à blocs (B) comprenant :

       (B-1) au moins un bloc de polymère (B-1) constitué essentiellement de motifs répétitifs issus d'au moins un monomère aromatique vinylique, et
       (B-2) au moins un bloc de polymère (B-2) constitué essentiellement de motifs répétitifs issus de l'isobutylène, l'au moins un copolymère à blocs (B) étant préférablement au moins partiellement hydrogéné ;
       et le rapport en poids de (B-1) sur (B-2) étant de 15/85 à 30/70 ; et

    (c) 0 à 10 % en poids d'au moins un additif éventuel (C),
    les composants (A), (B) et (C) totalisant 100 % en poids de la composition d'élastomère thermoplastique (E),

la composition d'élastomère thermoplastique (E) ayant une température de transition vitreuse Tg(E) de < 0 °C, calculée selon l'équation suivante :

$$Tg\,(E) = \frac{1}{\frac{w(A)}{Tg(A)} + \frac{w(B)}{Tg(B)}}$$

w(A) étant la fraction massique (poids) du composant A,
w(B) étant la fraction massique (poids) du composant B,
Tg(A) étant la température de transition vitreuse du composant A pur en kelvins,
Tg(B) étant la température de transition vitreuse du composant B pur en kelvins, et
Tg(E) étant la température de transition vitreuse de la composition E en kelvins,
Tg(A) et Tg(B) étant déterminés par analyse mécanique dynamique à 1 Hz selon la norme ISO 6721-2,
la composition d'élastomère thermoplastique (E) ayant une élasticité de rebondissement comprise entre 25 et 60 % selon la norme DIN 53512, et
l'au moins un polyuréthane thermoplastique aromatique (A) étant au moins un polyuréthane thermoplastique aromatique (A) transparent, translucide ou opaque.

2. Composition d'élastomère thermoplastique (E) selon la revendication 1, la composition d'élastomère thermoplastique (E) ayant une dureté Shore selon la norme DIN ISO 7619-1 de < 85 Shore A.

3. Composition d'élastomère thermoplastique (E) selon la revendication 1 ou 2, l'au moins un polyuréthane thermoplastique aromatique (A) étant un produit de réaction d'un mélange de réaction comprenant au moins un diisocyanate aromatique, au moins un polyol choisi parmi des polyéther polyols, et/ou des polyester polyols, et éventuellement au moins un agent d'extension de chaîne.

4. Composition d'élastomère thermoplastique (E) selon l'une quelconque des revendications 1 à 3, l'au moins un copolymère à blocs (B) étant un copolymère à blocs comprenant au moins deux blocs comprenant ≥ 90 % en poids de motifs répétitifs issus du styrène et au moins un bloc comprenant ≥ 90 % en poids de motifs répétitifs issus de l'isobutylène.

5. Composition d'élastomère thermoplastique (E) selon l'une quelconque des revendications 1 à 4, l'au moins un copolymère à blocs (B) étant un copolymère à blocs choisi parmi un poly(styrène-b-isobutylène-b-styrène), l'au moins un copolymère à blocs (B) étant préférablement au moins partiellement hydrogéné.

6. Composition d'élastomère thermoplastique (E) selon l'une quelconque des revendications 1 à 5, la composition d'élastomère thermoplastique (E) ayant une élasticité de rebondissement comprise entre 30 et 50 % selon la norme DIN 53512.

7. Composition d'élastomère thermoplastique (E) selon l'une quelconque des revendications 1 à 6, la composition d'élastomère thermoplastique (E) étant préparée par extrusion, mélangeage à sec et/ou mélange manuel.

8. Composition d'élastomère thermoplastique (E) selon l'une quelconque des revendications 1 à 7, la composition d'élastomère thermoplastique (E) comprenant au moins un additif (C) choisi parmi des lubrifiants, des plastifiants, des additifs d'amélioration de l'abrasion et des mélanges correspondants.

9. Composition d'élastomère thermoplastique (E) selon l'une quelconque des revendications 1 à 7, la composition d'élastomère thermoplastique (E) comprenant 0 à 10 % en poids d'au moins un additif (C) choisi parmi des additifs d'amélioration de l'abrasion et des mélanges correspondants.

10. Composition d'élastomère thermoplastique (E) selon l'une quelconque des revendications 1 à 9, la composition d'élastomère thermoplastique (E) comprenant au moins un additif (C) choisi parmi des plastifiants et des mélanges correspondants.

11. Composition d'élastomère thermoplastique (E) selon l'une quelconque des revendications 1 à 10, la composition d'élastomère thermoplastique (E) étant sensiblement exempte de copolymère à blocs de (styrène-éthylène-butylène-styrène) (SEBS), de copolymère à blocs de (styrène-éthylène-propylène-styrène) (SEPS), de copolymères à blocs de (styrène-éthylène-éthylène-propylène-styrène) (SEEPS), de copolymères à blocs de (styrène-butadiène-styrène) (SBS) et/ou de copolymères de (acrylonitrile-butadiène-styrène) (ABS).

12. Utilisation d'une composition d'élastomère thermoplastique (E) selon l'une quelconque des revendications 1 à 11 pour la production de semelles extérieures de chaussures ou de parties de semelles extérieures de chaussures.

13. Article (T) formé à partir d'une composition d'élastomère thermoplastique (E) selon l'une quelconque des revendications 1 à 11.

14. Article (T) selon la revendication 13, l'article (T) étant obtenu par des processus de moulage, des processus d'extrusion, des processus de thermoformage, des processus de stratification, des processus de calandrage et/ou des processus d'impression 3D.

15. Article (T) selon la revendication 13 ou 14, l'article (T) étant un matériau de semelle, en particulier en tant qu'un matériau de semelle pour des chaussures de sécurité.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2065386 A
- US 2160601 A
- US 20090249652 A
- US 20100088929 A
- US 20010046588 A
- US 20060100378 A
- CN 110283298
- CN 105086422
- US 20100160545 A

- WO 2016130639 A
- WO 2018200510 A
- US 2010010171 A1
- WO 2009069666 A1
- US 2016230000 A1
- US 2018118870 A1
- WO 2016093091 A1
- EP 0698637 A
- EP 0669367 A

**Non-patent literature cited in the description**

- **M.P. SEPE.** Thermal Analysis of Polymers. *Rapra Review Reports,* 1997, vol. 8 (11
- **W. BROSTOW ; R. CHIU ; A. VASSILIKOU-DOVA.** Prediction of glass transition temperatures: Binary blends and copolymers. *Materials Letter,* 2008, vol. 62, 3152-3155
- **R. GÄCHTER ; H. MÜLLER.** Taschenbuch der Kunststoffadditive. Carl Hanser Verlag, 1983, 494-510

- Plastics Additive Handbook. Hanser Publishers, 2001
- Prediction of glass transition temperatures: Binary blends and copolymers. **W. BROSTOW ; R. CHIU ; A. VASSILIKOU-DOVA.** Materials Letter. 2008, vol. 62, 3152-3155